# EUROPÄISCHE PATENTANMELDUNG

(11) **EP 2 399 849 A1**
(43) Veröffentlichungstag der Anmeldung: **28.12.2011**
(21) Anmeldenummer: 10166893.7
(22) Anmeldetag: 22.06.2010
(51) Int. Cl.: B65G 57/00, B65H 3/08, B65H 3/32, B65G 59/02, B65G 59/04

(54) **Vorrichtung und Verfahren zum Bereitstellen vereinzelter Zwischenlagen für einen Palettierroboter**

(71) Anmelder: Winkler + Dünnebier AG, 56564 Neuwied (DE)
(72) Erfinder: Salm, Thomas, Dr.-Ing., 52074 Aachen (DE)
(74) Vertreter: Müller, Gerald Christian

(57) **Zusammenfassung**

Die vorliegende Erfindung betrifft eine Vorrichtung zum Bereitstellen vereinzelter Zwischenlagen (2) für einen Palettierroboter, der jeweils eine vereinzelte Zwischenlage (2) während des Palettierens von einem Stapel aus Zwischenlagen abholt und zwischen bestimmten Lagen aus auf einer Palette zu palettierenden Gegenständen anordnet. Eine derartige Vorrichtung soll so weitergebildet werden, dass der apparative Aufwand zum Erzeugen der erforderlichen Bewegungen eines Trägerkörpers (3) in Vertikalrichtung (Z1) möglichst gering ist. Zur Lösung dieser Aufgabe wird vorgeschlagen, als Antriebseinrichtung zum Bewegen des Trägerkörpers (3) die Hubeinrichtung (8) zum Bewegen eines Aufnahmehalters (7) zum Halten der obersten Zwischenlage (2) einzusetzen.

## Beschreibung

### I. Anwendungsgebiet

Die vorliegende Erfindung betrifft eine Vorrichtung und ein Verfahren zum Bereitstellen vereinzelter Zwischenlagen für einen Palettierroboter, der jeweils eine vereinzelte Zwischenlage während des Palettierens von einem Stapel aus Zwischenlagen abholt und zwischen bestimmten Lagen aus auf einer Palette zu palettierenden Gegenständen anordnet. Dabei können die Gegenstände in Verpackungsschachteln oder sonstigen Behältnissen verpackt sein oder von unverpackten, ggf. stapelweise banderolierten Produkten gebildet werden, wie beispielsweise von banderolierten Stapeln aus Faltschachtelzuschnitten aus Kartonage.

### II. Technischer Hintergrund

Eine Vorrichtung sowie ein Verfahren zum Bereitstellen vereinzelter Zwischenlagen für einen Palettierroboter sind bereits aus der DE 10 2007 024 771 A1 bekannt. Bei der in Fig. 3 der vorgenannten Druckschrift gezeigten Vorrichtung wird ein Anschlagwinkel 7 mit Hilfe eines Motors 18 in Vertikalrichtung Z1 bewegt. Dabei fungiert der Anschlagwinkel 7 als Trägerkörper, der einerseits eine Aufnahmeeinrichtung 4 zum Aufnehmen bzw. Anheben der obersten Zwischenlage 2 eines Stapels 5 und andererseits eine zwischen die oberste Zwischenlage 2 und den verbleibenden Stapel 5 bewegbare Separiereinrichtung in Form eines Niederhalters 6 trägt.

Die bekannte Vorrichtung weist neben dem Motor 18 zum Bewegen des Trägerkörpers in Vertikalrichtung Z1 einen weiteren Motor 21 zum Bewegen eines Aufnahmekopfes 10 in Vertikalrichtung Z2 auf. Da der Trend zu möglichst geringen Anschaffungs- sowie Wartungskosten ungebrochen anhält, besteht das Bedürfnis, Vorrichtungen der in Rede stehenden Art sowohl im Hinblick auf den Anschaffungspreis als auch im Hinblick auf den Wartungsaufwand möglichst günstig zu gestalten.

### III. Darstellung der Erfindung

### a) Technische Aufgabe

Es ist daher die Aufgabe der vorliegenden Erfindung, eine Vorrichtung sowie ein Verfahren zum Bereitstellen vereinzelter Zwischenlagen für einen Palettierroboter zu schaffen, bei der bzw. bei welchem der apparative Aufwand zum Erzeugen der erforderlichen Bewegungen des Trägerkörpers in Vertikalrichtung möglichst gering ist.

### b) Lösung der Aufgabe

Diese Aufgabe wird mittels einer Vorrichtung bzw. mittels eines Verfahrens mit den Merkmalen der Ansprüche 1 bzw. 7 gelöst. Weitere Ausgestaltungen der vorliegenden Erfindung ergeben sich aus den Unteransprüchen.

Erfindungsgemäß wird vorgeschlagen, den in Vertikalrichtung bewegbaren Trägerkörper, der einerseits die Aufnahmeeinrichtung zum Aufnehmen der obersten Zwischenlage und andererseits die Separiereinrichtung zum Separieren der obersten Zwischenlage von dem verbleibenden Stapel trägt, mit Hilfe derjenigen Hubeinrichtung in Vertikalrichtung nach oben anzutreiben bzw. zu bewegen, die auch zum Bewegen des wenigstens einen Aufnahmehalters zum Halten der obersten Zwischenlage relativ zu dem Trägerkörper verwendet wird. Diese Hubeinrichtung übernimmt somit zwei Aufgaben, nämlich zum Einen das Anheben der obersten Zwischenlage mittels des Aufnahmehalters der Aufnahmeeinrichtung und zum Anderen das Bewegen des Trägerkörpers samt Separiereinrichtung in Vertikalrichtung nach oben.

Zum Bewegen des Trägerkörpers in Vertikalrichtung nach oben wird die von ihm getragene Aufnahmeeinrichtung auf die oberste Zwischenlage des Stapels aus Zwischenlagen aufgesetzt. Durch Betätigen der Hubeinrichtung, beispielsweise durch Ausfahren eines die Hubeinrichtung bildenden Pneumatikzylinders, wird der Trägerkörper in Vertikalrichtung angehoben, wobei sich die Hubeinrichtung während dieses Vorgangs auf dem Stapel aus Zwischenlagen abstützt und den Trägerkörper samt Separiereinrichtung unter Überwindung von deren Eigengewicht in Vertikalrichtung nach oben drückt. In der danach erreichten oberen Vertikalstellung wird der Trägerkörper mit Hilfe einer Fixiereinrichtung in Vertikalrichtung raumfest fixiert.

Nachdem der wenigstens eine Aufnahmehalter der Aufnahmeeinrichtung dahingehend aktiviert wurde, dass er die oberste Zwischenlage fest hält, wird die Hubeinrichtung erneut betätigt, beispielsweise durch Einfahren eines die Hubeinrichtung bildenden Pneumatikzylinders, so dass die oberste Zwischenlage zumindest teilweise von dem verbleibenden Stapel aus Zwischenlagen in Vertikalrichtung nach oben abgehoben wird. Ob ein teilweises oder vollständiges Abheben der obersten Zwischenlage von dem verbleibenden Stapel erfolgt, hängt einerseits davon ab, ob es sich um biegeschlaffe oder biegesteife Zwischenlagen handelt, sowie andererseits von der flächenmäßigen Größe der biegeschlaffen oder biegesteifen Zwischenlagen an sich.

Nun wird die an dem Trägerkörper befindliche Separiereinrichtung von einer Ruhestellung in ihre Separierstellung bewegt, in welcher sie sich zwischen der angehobenen obersten Zwischenlage und dem verbleibenden Stapel aus Zwischenlagen befindet. Die Art der Bewegung der Separiereinrichtung kann dabei eine reine Linearbewegung, eine reine Schwenkbewegung oder eine kombinierte Linear- und Schwenkbewegung sein. Nach Anordnung der Separiereinrichtung zwischen der obersten Zwischenlage und dem verbleibenden Stapel wird die Fixierung des Trägerkörpers in der oberen Vertikalstellung gelöst, so dass der Trägerkörper samt Separiereinrichtung und Aufnahmeeinrichtung ausschließlich aufgrund deren Eigengewichtes in Vertikalrichtung nach unten bewegt wird bzw. fällt bis er in einer unteren Vertikalstellung gehalten wird. Vorzugsweise lässt der wenigstens eine Aufnahmehalter der Aufnahmeeinrichtung die oberste Zwischenlage erst dann los, wenn sich der Trägerkörper in seiner unteren Vertikalstellung befindet.

In dem jetzt erreichten Zustand liegt die oberste Zwischenlage noch auf dem Stapel aus Zwischenlagen auf, jedoch befindet sich zwischen ihr und dem verbleibenden Stapel die Separiereinrichtung, bei der es sich beispielsweise um ein Flachblech handeln kann. Die oberste Zwischenlage liegt somit als vereinzelte Zwischenlage für den Palettierroboter zur Abholung bereit. Die Abholung der obersten Zwischenlage durch den Palettierroboter kann somit in an sich bekannter Weise schnell und ohne den Nachteil, dass an der Unterseite der obersten Zwischenlage aufgrund elektrostatischer Adhäsionskräfte ggf. andere Zwischenlagen haften bleiben, erfolgen. Biegeschlaffe Zwischenlagen können dabei trotz der in dem Raumbereich oberhalb des Stapels aus Zwischenlagen befindlichen Aufnahmeeinrichtung vertikal nach oben abgehoben werden. Sie werden beim Anstoßen an die Aufnahmeeinrichtung in ihrem entsprechenden Bereich nach unten umgebogen und können sich dadurch an der Aufnahmeeinrichtung vorbei vertikal nach oben bewegen. Bei biegesteifen Zwischenlagen ist es ggf. erforderlich, die vereinzelte oberste Zwischenlage zunächst in einer Horizontalrichtung aus dem Bereich unterhalb der Aufnahmeeinrichtung herauszubewegen, bevor sie weiter nach oben angehoben wird.

Vorzugsweise ist die Aufnahmeeinrichtung an dem Trägerkörper derart relativ zu diesem bewegbar angebracht, dass sie zumindest teilweise, bevorzugt vollständig aus dem Raumbereich oberhalb des Stapels aus Zwischenlagen heraus bewegbar ist. Bei vollständig freiem Raumbereich oberhalb des Stapels aus Zwischenlagen kann der Palettierroboter nicht nur bei biegeschlaffen Zwischenlagen, sondern auch im Falle von biegesteifen Zwischenlagen eine reine Vertikalbewegung zum Abheben der vereinzelten obersten Zwischenlage durchführen.

Der Vorteil der vorliegenden Erfindung besteht darin, dass im Gegensatz zu dem Stand der Technik gemäß DE 10 2007 024 771 A1 keine separate Antriebseinrichtung in Form eines Motors oder dergleichen für die Bewegung des Trägerkörpers in Vertikalrichtung benötigt wird. Die Bewegung des Trägerkörpers nach oben erfolgt mit Hilfe der Hubeinrichtung der Aufnahmeeinrichtung durch Abstützen bzw. Abdrücken an bzw. von dem Stapel aus Zwischenlagen. Zur Bewegung des Trägerkörpers nach unten wird ausschließlich die Schwerkraft genutzt. Die Anschaffungs- sowie Wartungskosten sind durch den Wegfall eines separaten Antriebs bei der erfindungsgemäßen Vorrichtung geringer als im Stand der Technik. Die erfindungsgemäße Vorrichtung benötigt darüber hinaus wesentlich weniger Platz als bekannte Vorrichtungen der in Rede stehenden Art.

Der wenigstens eine Aufnahmehalter der Aufnahmeeinrichtung kann selbst als Stützfuß zum Abstützen auf dem Stapel aus Zwischenlagen ausgebildet sein. Zu diesem Zweck ist für den Aufnahmehalter eine derart stabile Bauweise zu wählen, dass er die Abstützkräfte aushält, die beim Anheben des Trägerkörpers mittels der Hubeinrichtung auftreten. Vorzugsweise weist die Aufnahmeeinrichtung zusätzlich zu dem wenigstens einen Aufnahmehalter wenigstens einen separaten Stützfuß auf, mittels welchem sich die Hubeinrichtung auf dem Stapel aus Zwischenlagen abstützen kann. Bei diesem separaten Stützfuß kann es sich beispielsweise um einen würfel- oder quaderförmigen Körper aus Metall oder Kunststoff handeln. Auch beliebig andere Geometrien des Stützfußes sind denkbar, solange sie die beabsichtigte Abstützfunktion in geeigneter Weise erfüllen können.

Der wenigstens eine Aufnahmehalter wird vorzugsweise als Saughalter zum Ansaugen der obersten Zwischenlage ausgebildet. Die Kraft, welche die oberste Zwischenlage in diesem Fall an dem Aufnahmehalter hält, ergibt sich bei dieser Ausgestaltung ausschließlich aus dem Unterdruck, der durch Absaugen von Luft in einem Hohlraum des Saughalters entsteht, der von einem mit dem Saughalter in Kontakt stehenden Bereich der obersten Zwischenlage verschlossen wird.

Besonders vorteilhaft ist die Verwendung wenigstens eines elastisch verformbaren Saughalters in Verbindung mit wenigstens einem separaten Stützfuß. Bei dem elastisch verformbaren Saughalter kann es sich beispielsweise um einen Saugbalg handeln, dessen Balgstruktur beim Aufsetzen auf die oberste Zwischenlage des Stapels elastisch zusammengedrückt wird. In noch nicht auf die oberste Zwischenlage aufgesetztem und damit in entspanntem Zustand steht die Ebene, in welcher sich die Ansaugöffnung des Saugbalgs befindet, nach unten über eine der obersten Zwischenlage zugewandte Abstützfläche des Stützfußes hervor. Beim Aufsetzen von Stützfuß und Saugbalg auf die oberste Zwischenlage wird zunächst der Saugbalg solange in Vertikalrichtung elastisch verformt bzw. zusammengedrückt bis die Abstützfläche des Stützfußes die oberste Zwischenlage berührt. In diesem Zustand, in welchem sowohl der Saugbalg als auch der Stützfuß auf der obersten Zwischenlage aufliegen, ist der Saugbalg gegen die Oberfläche der obersten Zwischenlage vorgespannt, so dass eine satte Anlage der Ränder der Saugöffnung des Saugbalgs an die oberste Zwischenlage und damit eine gute Luftabdichtung des Hohlraums in dem Saugbalg gegenüber der Umgebung erreicht wird. Durch geeignete Bemessung des Ausmaßes, um welches der Saugbalg nach unten über die Abstützfläche des Stützfußes hervorsteht, kann in vorteilhafter Weise ein optimaler Kompromiss zwischen guter Luftabdichtung und damit zuverlässigem Anheben der obersten Zwischenlage einerseits sowie dem Vermeiden einer verminderten Lebensdauer durch zu starkes Zusammendrücken des Saugbalg andererseits eingestellt werden.

Vorzugsweise erfolgt das Halten des Trägerkörpers in seiner unteren Vertikalstellung, in welche er durch die Schwerkraftförderung gelangt, dadurch, dass die zwischen der obersten Zwischenlage und dem verbleibenden Stapel befindliche Separiereinrichtung auf dem verbleibenden Stapel aufliegt. Der Trägerkörper fällt in diesem Fall mit ausgefahrener Separiereinrichtung auf den verbleibenden Stapel aus Zwischenlagen und wird bei Auftreffen der Separiereinrichtung auf den verbleibenden Stapel schlagartig in der unteren Vertikalstellung abgebremst. Der verbleibende Stapel aus Zwischenlagen wird dementsprechend durch die Wirkung des Eigengewichts des Trägerkörpers und aller von ihm getragenen Einrichtungen zusammengedrückt.

Alternativ oder zusätzlich besteht die Möglichkeit, den Trägerkörper in seiner unteren Vertikalstellung mittels einer Fixiereinrichtung reib- und/oder formschlüssig zu fixieren.

Das Loslassen der vereinzelten obersten Zwischenlage durch die Aufnahmeeinrichtung erfolgt vorzugsweise nach dem Lösen der Fixierung des Trägerkörpers in seiner oberen Vertikalstellung, besonders bevorzugt erst dann, wenn der Trägerkörper in seine untere Vertikalstellung bewegt wurde bzw. gefallen ist. Das Festhalten der obersten Zwischenlage bis zu dem Zeitpunkt, in welchem der Trägerkörper in seine untere Vertikalstellung gefallen ist, hat den Vorteil, dass die oberste Zwischenlage während der Fallbewegung des Trägerkörpers nicht verrutschen und sich nicht verdrehen kann, da sie nach wie vor von der Aufnahmeeinrichtung gehalten wird.

Selbst dann, wenn die oberste Zwischenlage bis zu dem Zeitpunkt, in welchem der Trägerkörper seine untere Vertikalstellung erreicht hat, von der Aufnahmeeinrichtung gehalten wird, muss sie nach dem Loslassen noch eine verbleibende Fallstrecke bis zum Erreichen des verbleibenden Stapels zurücklegen. Um die Möglichkeit, dass ein Verrutschen oder Verdrehen der obersten Zwischenlage beim Durchfallen dieser Fallstrecke zu einer Lageungenauigkeit der vereinzelten obersten Zwischenlage führt, auszuschalten, kann nach dem Bewegen der Separiereinrichtung zwischen die oberste Zwischenlage und den verbleibenden Stapel durch ein weiteres Betätigen der Hubeinrichtung die oberste Zwischenlage aktiv geführt auf den verbleibenden Stapel abgesenkt bzw. auf diesem abgelegt werden. Die Lagegenauigkeit der für die Abholung durch den Palettierroboter schließlich bereit liegenden vereinzelten obersten Zwischenlage wird dadurch gewährleistet. Damit ist der zusätzliche Vorteil verbunden, dass sich vertikal nach oben erstreckende Führungsprofile erübrigen, die der Beibehaltung der Lagegenauigkeit der Zwischenlagen in dem Stapel dienen sowie in der Regel innerhalb der Palettierzelle im Bereich des Zwischenlagenplatzes angeordnet sind. Die Bewegungsfreiheit des Palettierroboters im Bereich des Zwischenlagenplatzes erhöht sich dementsprechend. Dieser vorteilhafte Effekt kommt um so mehr zum Tragen, je stärker die Höhe des Stapels im Laufe des Palettierprozesses abnimmt und vorhandene Führungsprofile über die oberste Zwischenlage hinaus ragen würden.

Besonders vorteilhaft ist es, wenn die weitere Betätigung der Hubeinrichtung zum Ablegen der obersten Zwischenlage auf dem Stapel nicht nur nach dem Bewegen der Separiereinrichtung zwischen die oberste Zwischenlage und den verbleibenden Stapel, sondern auch vor dem Zeitpunkt, in welchem der Trägerkörper die untere Vertikalstellung erreicht, erfolgt. In diesem Fall stützt sich die Aufnahmeeinrichtung zumindest während eines Teils der Bewegung des Trägerkörpers in seine untere Vertikalstellung an dem Stapel ab, so dass die Hubeinrichtung zumindest während dieses Teils der nach unten gerichteten Bewegung des Trägerkörpers die Funktion eines Stoßdämpfers mit Drosselwirkung ausüben kann. Der Trägerkörper bewegt sich dementsprechend langsam in seine untere Vertikalstellung.

Alternativ besteht die Möglichkeit, die vereinzelte oberste Zwischenlage im Wesentlichen gleichzeitig mit dem Lösen der Fixierung des Trägerkörpers in seiner oberen Vertikalstellung loszulassen. Eine weitere Alternative besteht darin, die Aufnahmeeinrichtung derart anzusteuern, dass zunächst die vereinzelte oberste Zwischenlage losgelassen wird und erst danach das Lösen der Fixierung des Trägerkörpers in seiner oberen Vertikalstellung erfolgt.

### c) Ausführungsbeispiel

Nachfolgend wird eine Ausführungsform der vorliegenden Erfindung beispielhaft anhand der beigefügten Zeichnungen beschrieben. Es zeigen:
- Fig. 1a bzw. 1b:: Eine perspektivische Ansicht bzw. eine vergrößerte Seitenansicht einer Ausführungsform der erfindungsgemäßen Vorrichtung in der Grundstellung;
- Fig. 2a bzw. 2b:: eine perspektivische Ansicht bzw. eine vergrößerte Seitenansicht der in Fig. 1 gezeigten Ausführungsform in der ersten Arbeitsstellung;
- Fig. 3a bzw. 3b:: eine perspektivische Ansicht bzw. eine vergrößerte Seitenansicht der in Fig. 1 gezeigten Ausführungsform in der zweiten Arbeitsstellung;
- Fig. 4a bzw. 4b:: eine perspektivische Ansicht bzw. eine vergrößerte Seitenansicht der in Fig. 1 gezeigten Ausführungsform in der dritten Arbeitsstellung;
- Fig. 5a bzw. 5b:: eine perspektivische Ansicht bzw. eine vergrößerte Seitenansicht der in Fig. 1 gezeigten Ausführungsform in der vierten Arbeitsstellung;
- Fig. 6a bzw. 6b:: eine perspektivische Ansicht bzw. eine vergrößerte Seitenansicht der in Fig. 1 gezeigten Ausführungsform in der fünften Arbeitsstellung;
- Fig. 7a bzw. 7b:: eine perspektivische Ansicht bzw. eine vergrößerte Seitenansicht der in Fig. 1 gezeigten Ausführungsform in der fünften Arbeitsstellung, wobei gerade die vereinzelte oberste Zwischenlage abgeholt wird;
- Fig. 8a bzw. 8b:: eine perspektivische Ansicht bzw. eine vergrößerte Seitenansicht der in Fig. 1 gezeigten Ausführungsform in der sechsten Arbeitsstellung; und
- Fig. 9a bzw. 9b:: eine perspektivische Ansicht bzw. eine vergrößerte Seitenansicht der in Fig. 1 gezeigten Ausführungsform in der siebenten Arbeitsstellung, die der in Fig. 1a, 1b gezeigten Grundstellung entspricht

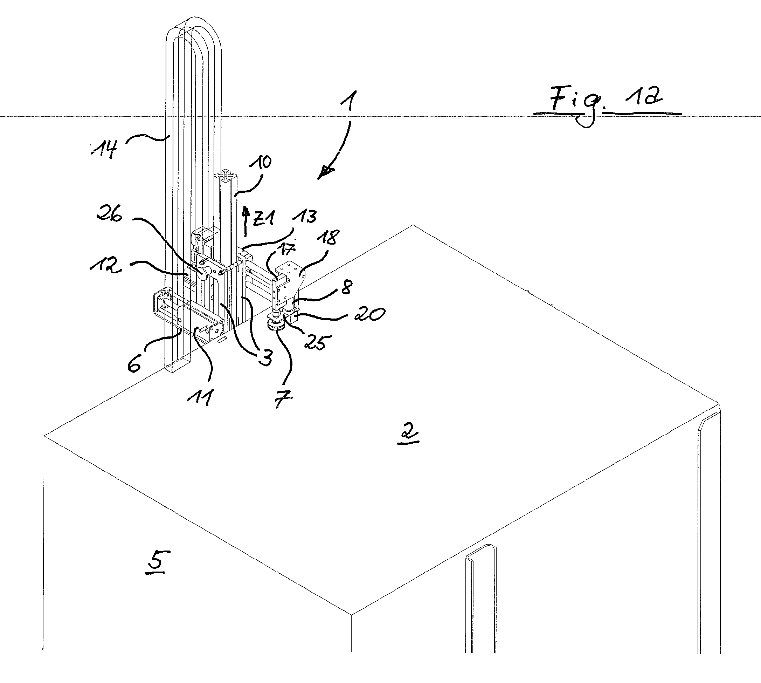

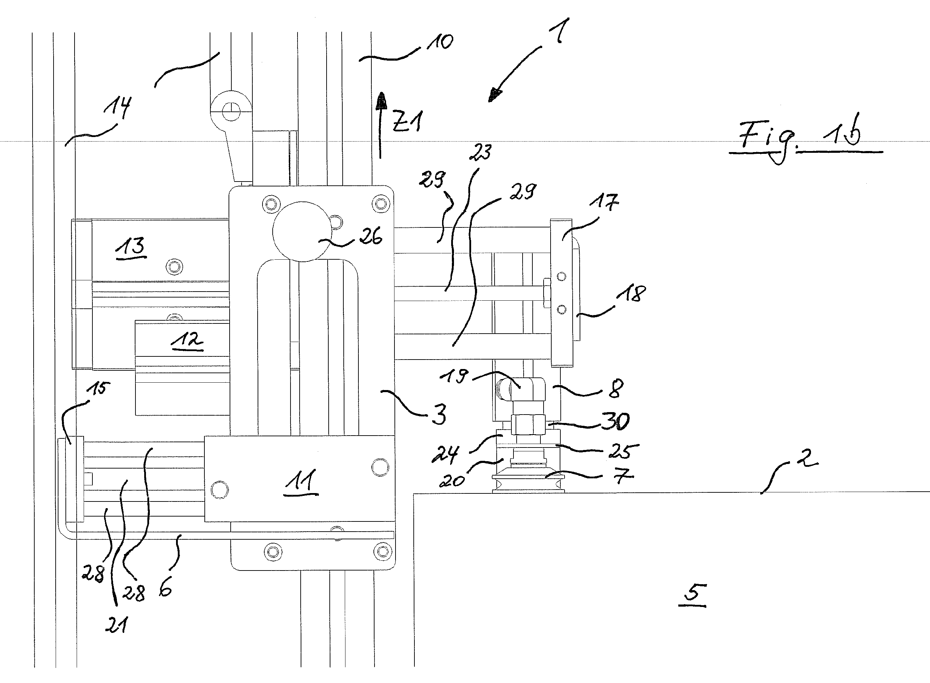

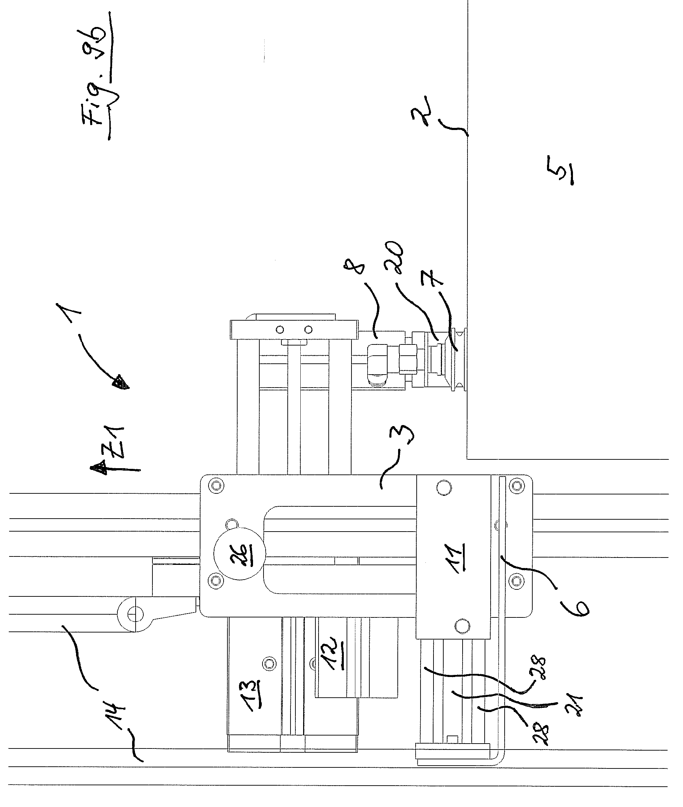

Die Fig. 1a, 1b bis 9a, 9b zeigen eine erfindungsgemäße Vorrichtung 1 in jeweils verschiedenen Stellungen bestimmter Bestandteile der Vorrichtung 1. Gleiche Bezugszeichen in den Fig. 1a, 1b bis 9a, 9b kennzeichnen jeweils gleiche Teile der Vorrichtung 1.

Die Fig. 1a und 1b zeigen die Vorrichtung 1 in ihrer Grundstellung. Bevor die Grundstellung sowie die verschiedenen Arbeitsstellungen erläutert werden, wird der Aufbau der gezeigten Ausführungsform an sich beschrieben.

Die Vorrichtung 1 umfasst einen als Trägerkörper ausgestalteten Schlitten 3, der in Vertikalrichtung Z1 verdrehgesichert entlang eines Vierkantprofils 10 gleiten kann. Alternativ kann anstelle des Schlittens 3 ein leichtgängiger Linearführungswagen als Trägerkörper verwendet werden. Der Schlitten 3 umfasst bei der gezeigten Ausführungsform zwei in den Zeichnungen nicht näher bezeichnete Platten, die miteinander verschraubt sind und zwischen denen das Vierkantprofil 10 in Vertikalrichtung Z1 hindurch verläuft.

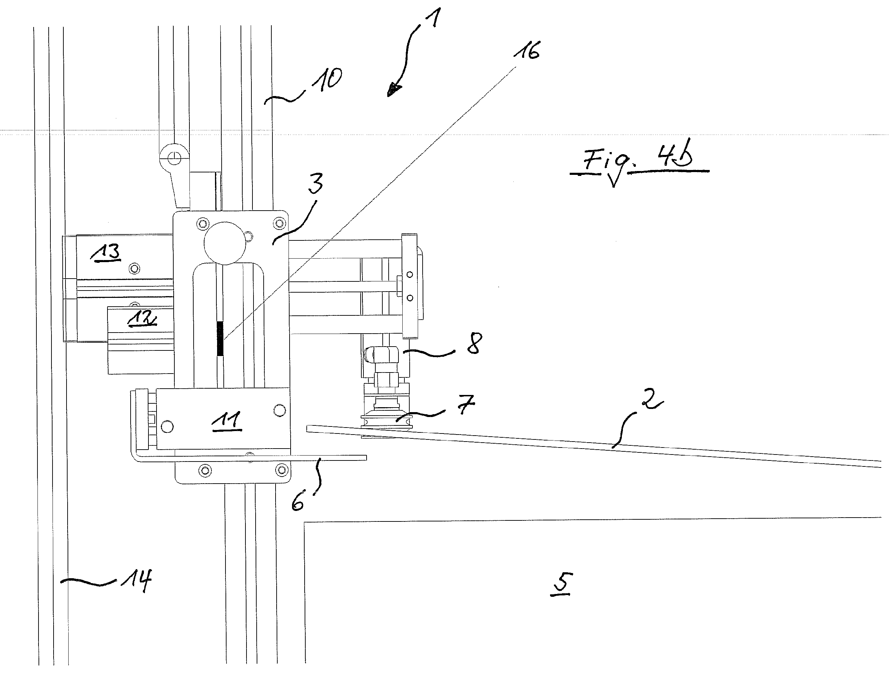

An dem Schlitten 3 sind insgesamt drei Hubzylinder angeordnet, bei denen es sich vorzugsweise um Pneumatikzylinder handelt, wobei alternativ jedoch auch Hydraulikzylinder denkbar sind. Wie in den Fig. 1a, 1b zu erkennen, ist ein erster Hubzylinder 11 im unteren Bereich des Schlittens 3 befestigt. An der Kolbenstange 21 sowie den beiden Führungsstangen 28 des ersten Hubzylinders 11 ist über eine Verbindungsplatte 15 ein L-förmiges Niederhalterelement 6 angeordnet, das als Separiereinrichtung im Sinne der vorliegenden Erfindung fungiert. Das Niederhalterelement 6 kann durch Einfahren der Kolbenstange 21 und der Führungsstangen 28 in den ersten Hubzylinder 11 von der in Fig. 1b gezeigten Ruhestellung in eine nach rechts ausgefahrene Separierstellung bewegt werden, die beispielsweise in Fig. 4b zu erkennen ist.

An dem Schlitten 3 ist des weiteren ein zweiter Hubzylinder 12 befestigt, der als Fixier- oder Bremszylinder fungiert. Seine in den Zeichnungen nicht dargestellte bzw. verdeckte Kolbenstange trägt einen Fixier- bzw. Bremsschuh 16, der in Fig. 4b zu erkennen ist. Durch Ausfahren der Kolbenstange des zweiten Hubzylinders 12 wird der Fixierschuh 16 seitlich gegen das Vierkantprofil 10 gedrückt, so dass der Schlitten 3 in diesem Zustand reibschlüssig in einer bestimmten Vertikalstellung in Vertikalrichtung Z1 fixiert ist. Der zweite Hubzylinder 12 bildet zusammen mit dem Fixierschuh 16 somit die Fixiereinrichtung in Sinne der vorliegenden Erfindung.

Im oberen Bereich des Schlittens 3 und auf der dem ersten Hubzylinder 11 gegenüber liegenden Seite ist ein dritter Hubzylinder 13 angeordnet, der bei der gezeigten Ausführungsform eine Kolbenstange 23 sowie zwei aus Stabilitätsgründen etwas dickere Führungsstangen 29 aufweist. Mit Hilfe einer Verbindungsplatte 17 sowie eines gebogenen Anschlusselements 18 ist ein vierter Hubzylinder 8 an der Kolbenstange 23 sowie den beiden Führungsstangen 29 angebracht, der als Hubeinrichtung im Sinne der vorliegenden Erfindung fungiert. Auch bei dem vierten Hubzylinder 8 handelt es sich vorzugsweise um einen Pneumatikzylinder, wobei alternativ auch ein Hydraulikzylinder zum Einsatz kommen kann.

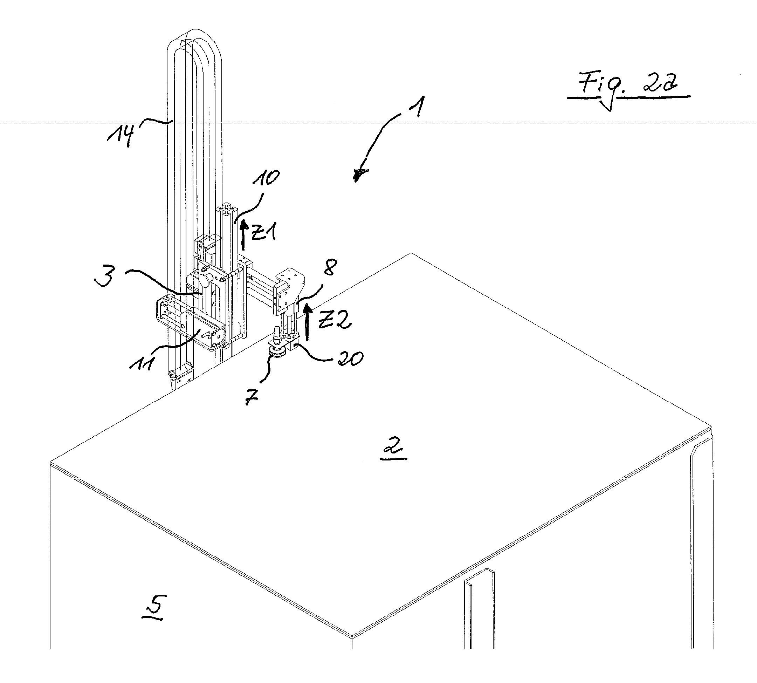

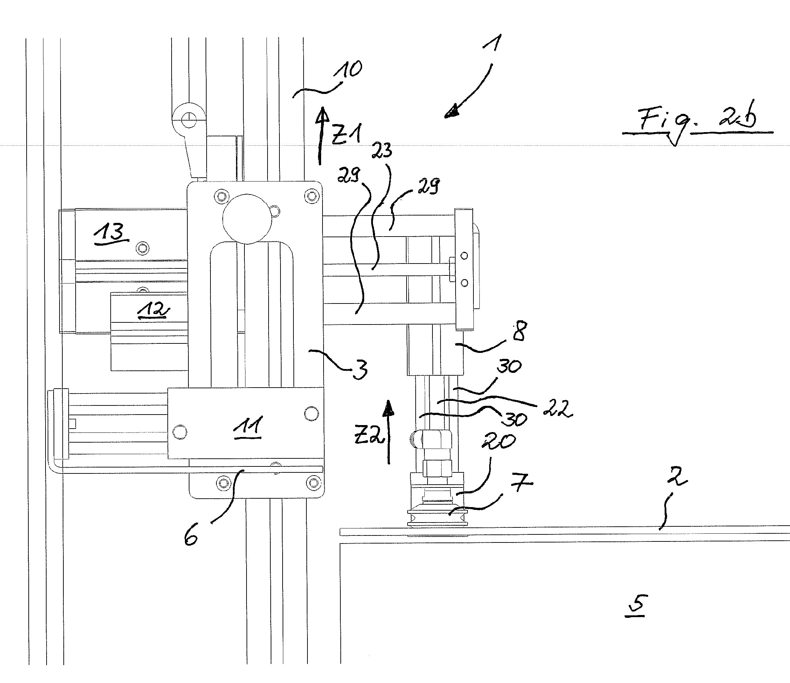

Wie besser in den Fig. 2a, 2b zu erkennen ist, weist der vierte Hubzylinder 8 bei der gezeigten Ausführungsform eine Kolbenstange 22 sowie zwei Führungsstangen 30 auf. An den freien Enden der Kolbenstange 22 sowie der beiden Führungsstangen 30 ist eine Verbindungsplatte 24 angeordnet, auf deren Unterseite eine am besten in Fig. 1a zu erkennende Halteplatte 25 befestigt ist. Die Halteplatte 25 trägt einen als Aufnahmehalter im Sinne der vorliegenden Erfindung fungierenden Saugbalg 7, der über einen Saugluftanschluss 19 mit Saugluft sowie bei Bedarf auch mit Druckluft beaufschlagt werden kann. Außerdem ist an der Halteplatte 25 bzw. der Verbindungsplatte 24 ein würfel- oder quaderförmiger Stützfuß 20 mit einer Abstützfläche zum Abstützen auf einem Untergrund befestigt. Der vierte Hubzylinder 8, der Saugbalg 7 und der Stützfuß 20 bilden bei der gezeigten Ausführungsform die Aufnahmeeinrichtung zum Aufnehmen der obersten Zwischenlage 2.

Zur Versorgung der Hubzylinder 8, 11, 12 und 13 mit Pneumatikluft ist eine flexible bzw. biegsame Energieleitung 14 an dem Schlitten 3 angeschlossen. Außerdem weist der Schlitten 3 einen Handknauf 26 auf, mit dessen Hilfe er von Hand in Vertikalrichtung Z1 nach oben oder unten bewegt werden kann. Nachfolgend werden die einzelnen Verfahrensschritte beschrieben, gemäß welchen die Vorrichtung 1 vereinzelte Zwischenlagen für einen Palettierroboter bereitstellt.

Die Fig. 1a, 1b zeigen die in einer Palettierzelle befindliche Vorrichtung 1 in ihrer Grundstellung, in welche sie beispielsweise manuell von einem Bediener gebracht wird. Hierzu werden die Hubzylinder 8, 11, 12 und 13 drucklos geschaltet und der Bediener betritt die Palettierzelle, stellt einen Stapel 5 aus Zwischenlagen bereit, hält den Schlitten 3 mit Hilfe des Handknaufs 26 fest, bewegt das Niederhalterelement 6 in seine Ruhestellung, wenn es sich noch nicht in dieser befindet, und setzt den Stützfuß 20 sowie den Saugbalg 7 durch Absenken des Schlittens 3 auf der obersten Zwischenlage 2 des Stapels 5 ab. Bei den Zwischenlagen kann es sich beispielsweise um biegschlaffe Zwischenlagen aus Papier oder um biegesteife Zwischenlagen aus Wellpappe oder Karton handeln.

In der Grundstellung liegen der Saugbalg 7 sowie der Stützfuß 20 somit auf der obersten Zwischenlage 2 des bereitgestellten Stapels 5 aus Zwischenlagen auf. Da die Ebene, in welcher sich die Saugöffnung des Saugbalgs 7 befindet, in nicht auf die oberste Zwischenlage 2 aufgesetztem Zustand nach unten über die dem Stapel 5 zugewandte Abstützfläche des Stützfußes 20 hervorsteht, ist der Saugbalg 7 in der gezeigten Grundstellung elastisch zusammengedrückt und dadurch gegen die Oberfläche der obersten Zwischenlage 2 vorgespannt. Die nicht gezeigte Saugkammer des Saugbalgs 7 ist daher weitestgehend luftdicht verschlossen und der Saugbalg 7 kann die oberste Zwischenlage 2 sicher halten. Die Kolbenstange 22 sowie die Führungsstangen 30 des vierten Hubzylinders 8 sind in der Grundstellung eingefahren.

Die Fig. 2a, 2b zeigen erste Arbeitsstellung der Vorrichtung 1. Im Vergleich zu der Grundstellung wurden die Kolbenstange 22 und die Führungsstangen 30 des vierten Hubzylinders 8 ausgefahren. Dabei stützt sich dieser mit Hilfe des Stützfußes 20 auf der obersten Zwischenlage 2 des Stapels 5 ab und drückt sein Zylindergehäuse in Vertikalrichtung Z2 nach oben. Dabei nimmt er über die Kolbenstange 23 und die Führungsstangen 29 des dritten Hubzylinders 13 den gesamten Schlitten 3 mit und bewegt diesen in Vertikalrichtung Z1 um die gleiche Wegstrecke nach oben, so dass der Schlitten 3 in eine obere Vertikalstellung gelangt.

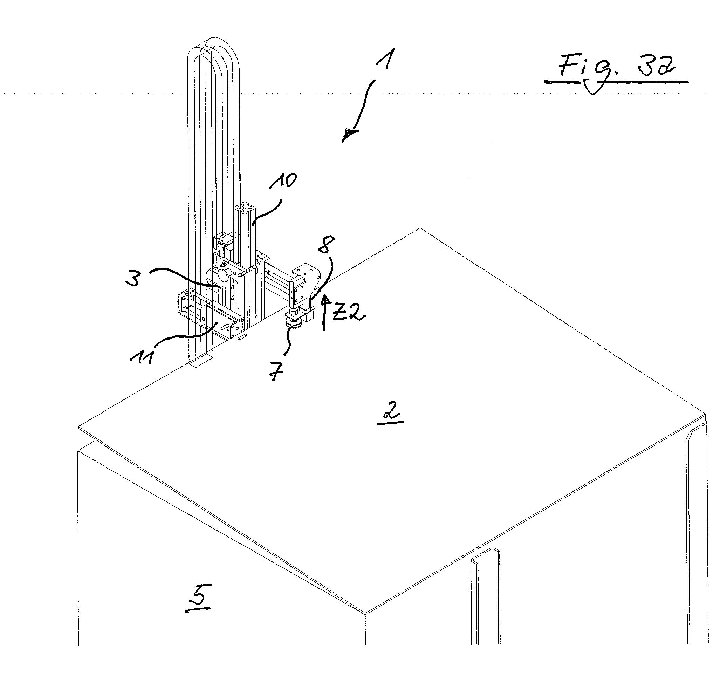

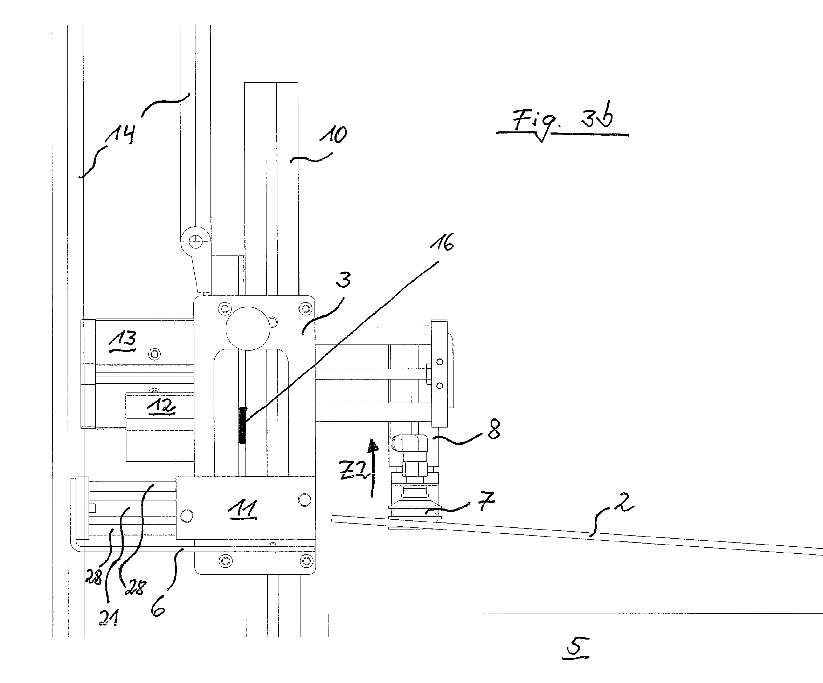

Die Fig. 3a, 3b zeigen die dritte Arbeitsstellung der Vorrichtung 1. Gegenüber der ersten Arbeitsstellung wurde die Kolbenstange des zweiten Hubzylinders 12 ausgefahren, so dass der Fixierschuh 16 in Fig. 3b von links reibschlüssig an das Vierkantprofil 10 angreift und den Schlitten 3 dadurch in der in den Fig. 2b und 3b gezeigten oberen Vertikalstellung fixiert. Anschließend wurden die Kolbenstange 22 und die Führungsstangen 30 des vierten Hubzylinders 8 eingefahren, so dass der an der Oberfläche der obersten Zwischenlage 2 angreifende Saugbalg 7 in Vertikalrichtung Z2 vertikal nach oben bewegt wurde. Dadurch hat er die oberste Zwischenlage 2 entsprechend der Darstellung in den Fig. 3a, 3b in Vertikalrichtung Z2 nach oben von dem Stapel 5 aus Zwischenlagen abgehoben. Wie in Fig. 3b zu erkennen ist, wird die oberste Zwischenlage 2 derart angehoben, dass sie zumindest teilweise oberhalb derjenigen Raumhöhe zu liegen kommt, in welcher sich das Niederhalterelement 6 befindet.

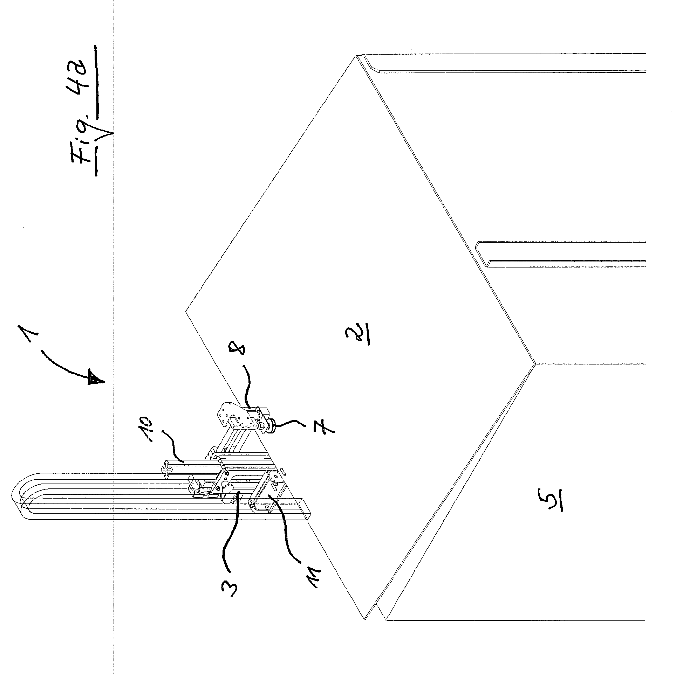

Die Fig. 4a, 4b zeigen die dritte Arbeitsstellung der Vorrichtung 1. Sie wird wie in der zweiten Arbeitsstellung nach wie vor mit Hilfe des Fixierschuhs 16 in ihrer oberen Vertikalstellung fixiert an dem Vierkantprofil 10 gehalten. Gegenüber der zweiten Arbeitsstellung wurde das in den Fig. 1b, 2b und 3b in seiner Ruhestellung gezeigte Niederhalterelement 6 nach rechts in die in Fig. 4b gezeigte Separierstellung bewegt, in welcher es sich teilweise in dem Zwischenraum zwischen der angehobenen obersten Zwischenlage 2 und dem verbleibenden Stapel 5 befindet. Die Bewegung von der Ruhestellung in die Separierstellung des Niederhalterelements 6 erfolgte durch Einfahren der Kolbenstange 21 und der Führungsstangen 28 in den ersten Hubzylinder 11.

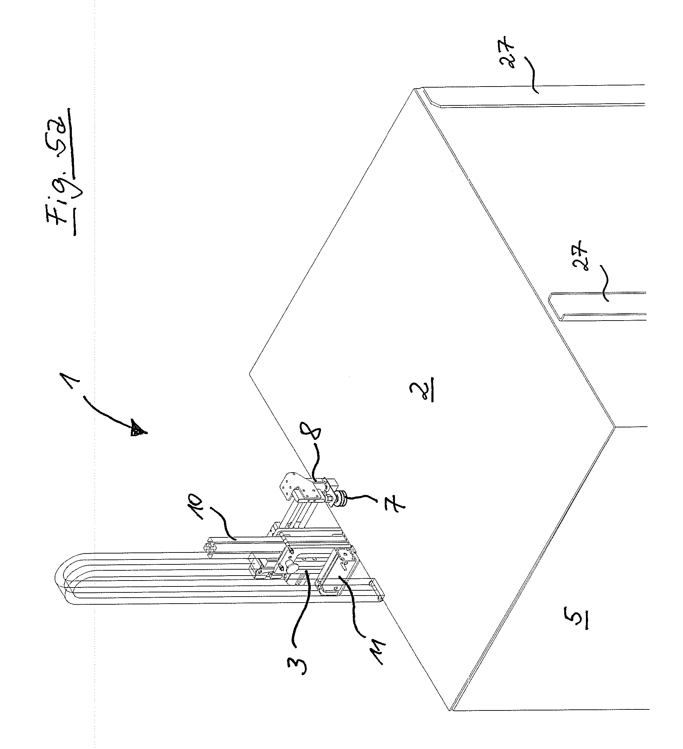

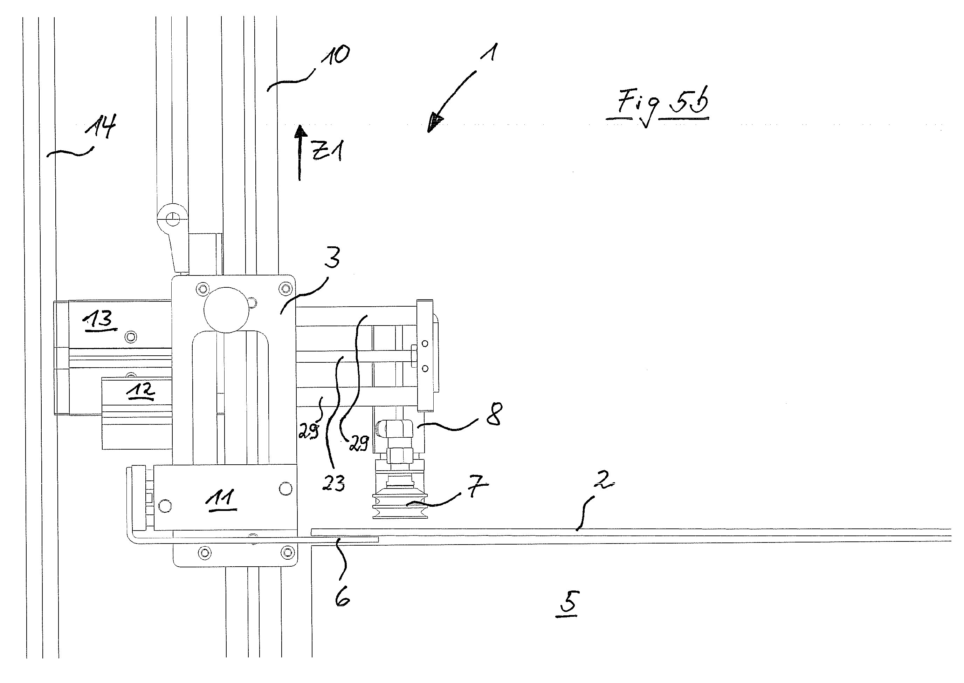

Die Fig. 5a, 5b zeigen die vierte Arbeitsstellung der Vorrichtung 1. Gegenüber der dritten Arbeitsstellung wurde die Kolbenstange des zweiten Hubzylinders 12 eingefahren, so dass der in Fig. 4b noch zu sehende Fixierschuh 16 nicht mehr an das Vierkantprofil 10 angreift. Dadurch ist der Schlitten 3 samt Hubzylinder 11, Niederhalterelement 6, Hubzylinder 12, Hubzylinder 13, Hubzylinder 8, Saugbalg 7 und Stützfuß 20 aufgrund Schwerkraftwirkung in Vertikalrichtung Z1 nach unten gefallen. Die Fallbewegung wurde erst durch das Aufschlagen des in seiner Separierstellung befindlichen Niederhalterelements 6 auf den Stapel 5 aus Zwischenlagen gestoppt, so dass der Schlitten 3 in der in Fig. 5b gezeigten unteren Vertikalstellung gehalten wird. Alternativ oder zusätzlich kann der Schlitten 3 durch Ausfahren der Kolbenstange des zweiten Hubzylinders 12 in der unteren Vertikalstellung fixiert werden. Denkbar ist auch, die Fallbewegung des Schlittens 3 mit Hilfe des Fixierschuhs 16 allmählich zu verzögern und den Schlitten 3 in einer solchen unteren Vertikalstellung zum Stehen zu bringen, in welcher die Unterseite des Niederhalterelements 6 den Stapel 5 noch nicht berührt. Schließlich wurde außerdem der Saugbalg 7 saugluftlos geschaltet, so dass er die oberste Zwischenlage 2 losgelassen hat und diese zurück auf den Stapel 5 fallen konnte, wobei sich jetzt jedoch das Niederhalterelement 6 zwischen der obersten Zwischenlage 2 und dem verbleibenden Stapel 5 befindet.

Vorzugsweise wird die oberste Zwischenlage 2 während der gesamten Fallbewegung des Schlittens 3 von der in Fig. 4b gezeigten Arbeitsstellung in die in Fig. 5b gezeigte Arbeitsstellung von dem Saugbalg 7 gehalten. Wegen des in Fig. 4b zu erkennenden Abstandes zwischen dem Niederhalterelement 6 und dem linken Randbereich der obersten Zwischenlage 2 muss letztere nach dem Loslassen durch den Saugbalg 7 jedoch noch eine diesem Abstand entsprechende Fallstrecke durchfallen. Hierbei kann ein Verrutschen oder Verdrehen der fallenden Zwischenlage 2 auftreten und zu einer Lageungenauigkeit führen.

Soll diese Lageungenauigkeit ausgeschlossen werden, so können die Kolbenstange 22 und die Führungsstangen 30 des Hubzylinders 8 ausgefahren und die oberste Zwischenlage 2 dadurch aktiv geführt nach unten auf den verbleibenden Stapel 5 abgesenkt bzw. auf diesem abgelegt werden. Wegen des horizontalen Abstandes zwischen dem Niederhalterelement 6 einerseits und dem Saugbalg 7 sowie Stützfuß 20 andererseits ist dies zumindest bei biegeschlaffen Zwischenlagen möglich und bei einer gewissen Restbiegsamkeit an sich biegesteifer Zwischenlagen auch bei derartigen Zwischenlagen im Einzelfall praktikabel. Die insbesondere in Fig. 5a gezeigten Führungsprofile 27, welche die Lagegenauigkeit der Zwischenlagen des Stapels 5 gewährleisten, wenn kein aktiv geführtes Absenken durch den Saugbalg 7 erfolgt, erübrigen sich im Falle des aktiv geführten Absenkens mit Hilfe des Saugbalges 7.

Bei Bedarf kann das Ausfahren der Kolbenstange 22 und der Führungsstangen 30 des Hubzylinders 8 derart gesteuert werden, dass sich der Stützfuß 20 vor demjenigen Zeitpunkt, in welchem der Schlitten 3 seine untere Vertikalstellung gemäß Fig. 5b erreicht bzw. in welchem das Niederhalterelement 6 auf den Stapel 5 aufschlägt, auf dem verbleibenden Stapel 5 abstützt. In diesem Fall fungiert der drucklos geschaltete Hubzylinder 8 wie ein Stoßdämpfer, der die Fallbewegung des Schlittens 3 abdämpft und wegen seiner Drosselwirkung ein langsames Absenken des Schlittens 3 in seine untere Vertikalstellung gemäß Fig. 5b durch ein entsprechend langsames Einfahren der Kolbenstange 22 sowie der Führungsstangen 30 in den Hubzylinder 8 ermöglicht.

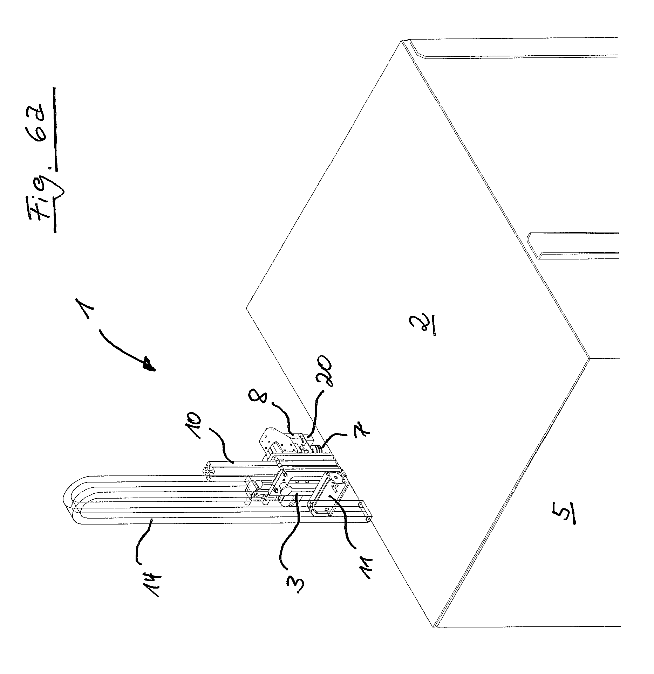

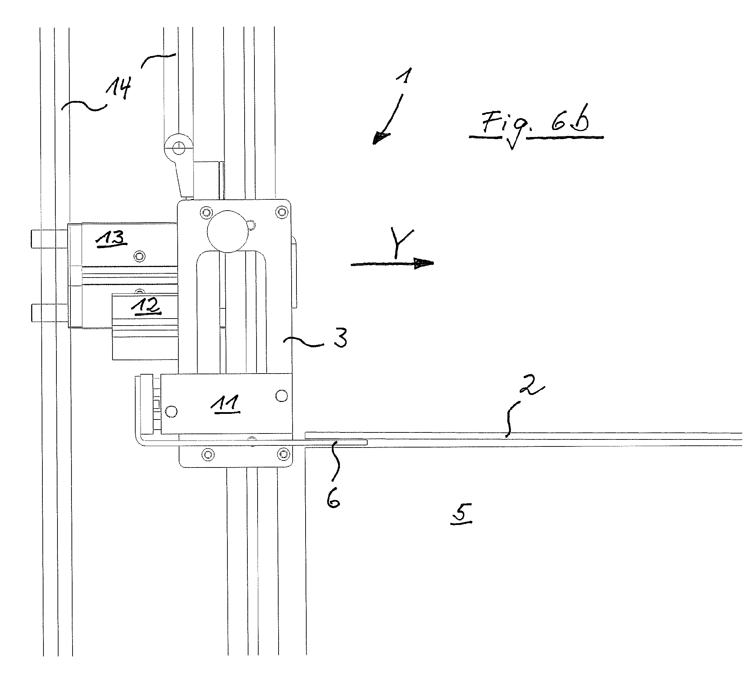

Die Fig. 6a, 6b zeigen die fünfte Arbeitsstellung der Vorrichtung 1. Im Vergleich zu der vierten Arbeitsstellung wurden die Kolbenstange 23 und die Führungsstangen 29 des dritten Hubzylinders 13 in Horizontalrichtung Y, d.h. in Fig. 6b nach links, eingefahren, so dass sich die Aufnahmeeinrichtung umfassend den Hubzylinder 8, den Saugbalg 7 sowie den Stützfuß 20 vollständig aus dem Raumbereich oberhalb des Stapels 5 aus Zwischenlagen heraus bewegt hat. In der in den Fig. 6a, 6b gezeigten fünften Arbeitsstellung liegt nun eine vereinzelte oberste Zwischenlage 2 für die Abholung durch einen nicht gezeigten Palettierroboter bereit.

Es sei darauf hingewiesen, dass die Verfahrbarkeit des Hubzylinders 8, des Saugbalgs 7 und des Stützfußes 20 in Horizontalrichtung Y lediglich ein bei der gezeigten Ausführungsform vorhandenes optionales Merkmal der vorliegenden Erfindung ist. Im Falle biegeschlaffer Zwischenlagen 2 könnte die oberste Zwischenlage 2 ohne weiteres auch in der in Fig. 5b gezeigten Arbeitsstellung vertikal nach oben abgehoben werden. Sie würde bei Anstoßen an den Saugbalg 7 in ihrem entsprechenden Randbereich einfach nach unten umgebogen werden. Im Falle steifer, nicht biegsamer Zwischenlagen 2 könnte der Palettierroboter die oberste Zwischenlage 2 in der in Fig. 5b gezeigten Arbeitsstellung der Vorrichtung 1 zunächst horizontal nach rechts bewegen und erst dann weiter anheben, wenn sie den in Fig. 5b rechts von dem Hubzylinder 8 bzw. dem Saugbalg 7 liegenden nach oben freien Raumbereich erreicht hat.

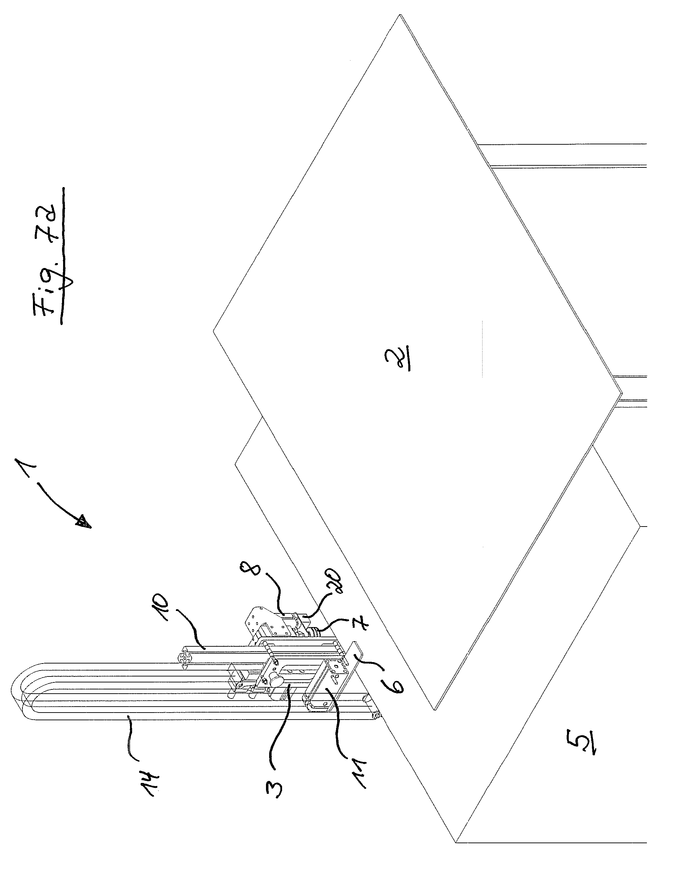

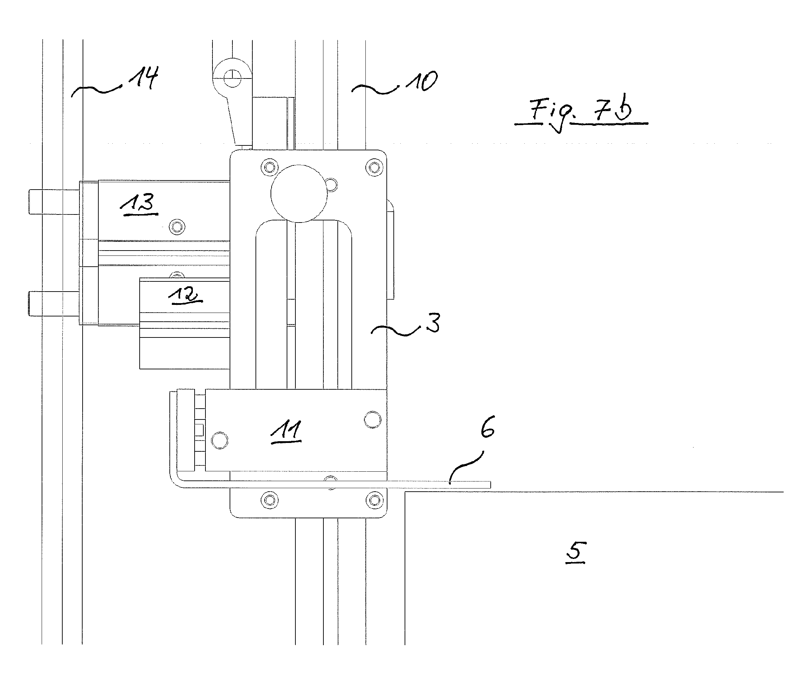

Die Fig. 7a zeigt, wie gerade die vereinzelte oberste Zwischenlage 2 von einem nicht dargestellten Palettierroboter abgeholt wird. Entsprechend Fig. 7a wurde die oberste Zwischenlage 2 bereits soweit von dem Stapel 5 entfernt, dass sie in dem vergrößerten Ausschnitt gemäß Seitenansicht der Fig. 7b nicht mehr enthalten ist. Das in der Separierstellung befindliche Niederhalterelement 6 ist jetzt nicht mehr von der vereinzelten obersten Zwischenlage 2 verdeckt und somit in Blickrichtung von oben auf den Stapel 5 sichtbar. Der Schlitten 3 wird nach wie vor von dem auf dem Stapel 5 aufliegenden Niederhalterelement 6 in seiner unteren Vertikalstellung gehalten.

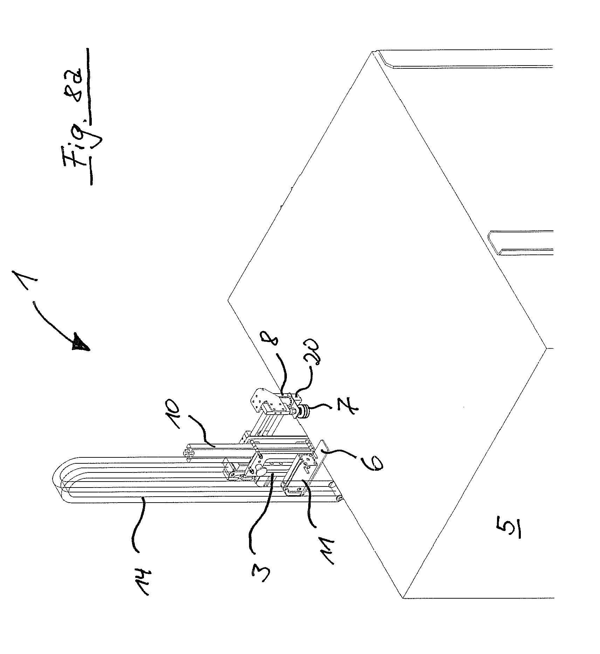

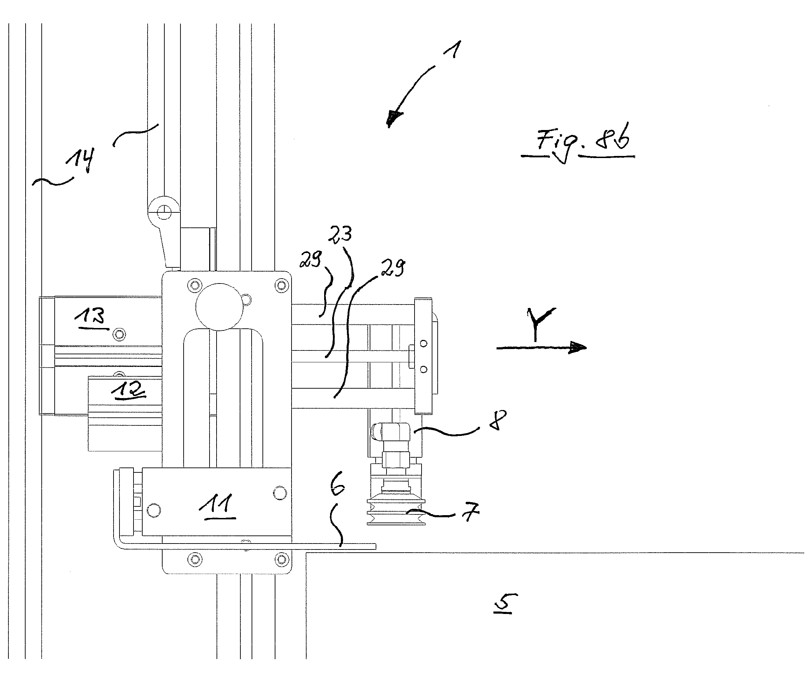

Die Fig. 8a, 8b zeigen die sechste Arbeitsstellung der Vorrichtung 1. Gegenüber der fünften Arbeitsstellung gemäß der Fig. 6a, 6b sowie 7a, 7b wurden die Kolbenstange 23 und die Führungsstangen 29 des dritten Hubzylinders 13 wieder in Horizontalrichtung Y, d.h. in Fig. 8b nach rechts, ausgefahren, so dass ich der Saugbalg 7, der Stützfuß 20 und der Hubzylinder 8 wieder in dem Raumbereich oberhalb des Stapels 5 aus Zwischenlagen befinden.

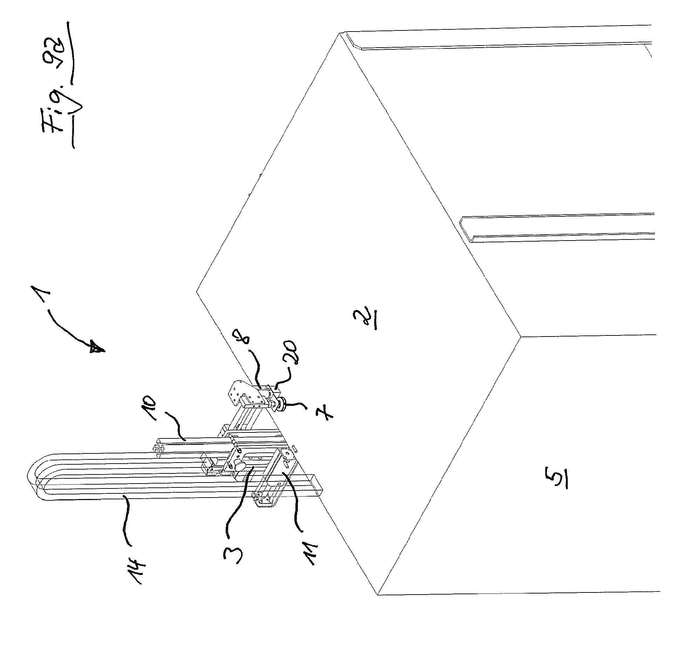

Die Fig. 9a, 9b zeigen die siebente Arbeitsstellung der Vorrichtung 1, die der in den Fig. 1a, 1b dargestellten Grundstellung entspricht. Gegenüber der sechsten Arbeitsstellung wurde das Niederhalterelement 6 in Fig. 8b von rechts aus der Separierstellung nach links in die Ruhestellung bewegt. Diese Bewegung wurde durch Ausfahren der Kolbenstange 21 und der Führungsstangen 28 des ersten Hubzylinders 11 bewirkt. Vor dem Bewegen des Niederhalterelements 6 von der Separierstellung in die Ruhestellung wurde der Schlitten 3 in Vertikalrichtung Z1 entweder von Hand mit Hilfe des Handknaufs 26 festgehalten oder durch Betätigen des zweiten Hubzylinders 12 fixiert. Nach dem Verfahren des Niederhalterelements 6 in die Ruhestellung wurde der Schlitten 3 ein wenig abgesenkt, so dass der Saugbalg 7 und der Stützfuß 20 auf der nächsten obersten Zwischenlage 2 des Stapels 5 aufliegen. Ausgehend von der in den Fig. 9a, 9b gezeigten siebenten Arbeitsstellung kann der anhand der Fig. 1a, 1b bis 8a, 8b beschriebene Arbeitszyklus beliebig oft wiederholt werden.

### BEZUGSZEICHENLISTE

- 1: Vorrichtung
- 2: Zwischenlage
- 3: Trägerkörper (Schlitten)
- 5: Stapel
- 6: Separiereinrichtung (Niederhalterelement)
- 7: Aufnahmehalter (Saugbalg)
- 8: Hubeinrichtung (vierter Hubzylinder)
- 10: Vierkantprofil
- 11: erster Hubzylinder
- 12: zweiter Hubzylinder
- 13: dritter Hubzylinder
- 14: Energieleitung
- 15: Verbindungsplatte
- 16: Fixierschuh
- 17: Verbindungsplatte
- 18: Anschlusselement
- 19: Saugluftanschluss
- 20: Stützfuß
- 21: Kolbenstange von 11
- 22: Kolbenstange von 8
- 23: Kolbenstange von 13
- 24: Verbindungsplatte
- 25: Halteplatte
- 26: Handknauf
- 27: Führungsprofile
- 28: Führungsstangen von 11
- 29: Führungsstangen von 13
- 30: Führungsstangen von 8

- Y: Horizontalrichtung
- Z1,Z2: Vertikalrichtung

## Patentansprüche

1. Vorrichtung zum Bereitstellen vereinzelter Zwischenlagen (2) für einen Palettierroboter, der die vereinzelte Zwischenlage während des Palettierens abholt und zwischen bestimmten Lagen aus zu palettierenden Gegenständen anordnet, umfassend
• einen in Vertikalrichtung (Z1) bewegbaren Trägerkörper (3),
• eine Antriebseinrichtung zum Bewegen des Trägerkörpers (3) in der Vertikalrichtung (Z1),
• eine Aufnahmeeinrichtung (7, 8) zum Aufnehmen der obersten Zwischenlage (2) eines Stapels (5) aus Zwischenlagen (2), wobei die Aufnahmeeinrichtung (7, 8) an dem Trägerkörper (3) angeordnet ist und wenigstens einen Aufnahmehalter (7) zum Halten der obersten Zwischenlage (2) sowie eine Hubeinrichtung (8) zum Bewegen des Aufnahmehalters (7) relativ zu dem Trägerkörper (3) und in Vertikalrichtung (Z2) aufweist, und
• eine zwischen die oberste Zwischenlage (2) und den verbleibenden Stapel (5) bewegbare Separiereinrichtung (6) zum Separieren der obersten Zwischenlage (2) von dem Stapel (5), wobei die Separiereinrichtung (6) an dem Trägerkörper (3) angeordnet ist,
**dadurch gekennzeichnet, dass**
• die Antriebseinrichtung zum Bewegen des Trägerkörpers (3) von der Hubeinrichtung (8) zum Bewegen des Aufnahmehalters (7) gebildet wird, so dass der Trägerkörper (3) mit Hilfe der Aufnahmeeinrichtung (7, 8) an dem Stapel (5) aus Zwischenlagen (2) abstützbar und durch Betätigen der Hubeinrichtung (8) in der Vertikalrichtung (Z1) nach oben bewegbar ist, und
• der Trägerkörper (3) eine Fixiereinrichtung (12, 16) zum Fixieren des Trägerkörpers (3) in der Vertikalrichtung (Z1) aufweist, so dass nach dem Fixieren des Trägerkörpers (3) die von dem Aufnahmehalter (7) gehaltene oberste Zwischenlage (2) durch erneutes Betätigen der Hubeinrichtung (8) in der Vertikalrichtung (Z2) anhebbar ist.

2. Vorrichtung nach Anspruch 1,
**dadurch gekennzeichnet, dass**
die Aufnahmeeinrichtung (7, 8) wenigstens einen Stützfuß (10) zum Abstützen auf dem Stapel (5) aus Zwischenlagen (2) aufweist.

3. Vorrichtung nach Anspruch 1 oder 2,
**dadurch gekennzeichnet, dass**
der Aufnahmehalter (7) als Saughalter zum Ansaugen der obersten Zwischenlage (2) ausgebildet ist.

4. Vorrichtung nach Anspruch 3 in Verbindung mit Anspruch 2,
**dadurch gekennzeichnet, dass**
der Saughalter als elastisch verformbarer Saughalter ausgebildet ist und über eine dem Stapel (5) aus Zwischenlagen (2) zugewandte Abstützfläche des Stützfußes (10) derart nach unten hervorsteht, dass bei auf dem Stapel (5) aus Zwischenlagen (2) aufliegendem Stützfuß (10) der Saughalter in elastisch verformten Zustand im Wesentlichen saugdicht an der obersten Zwischenlage (2) angreift.

5. Vorrichtung nach Anspruch 1 oder 3,
**dadurch gekennzeichnet, dass**
der Aufnahmehalter (7) selbst als Stützfuß zum Abstützen auf dem Stapel (5) aus Zwischenlagen (2) ausgebildet ist.

6. Vorrichtung nach einem der vorangehenden Ansprüche,
**dadurch gekennzeichnet, dass**
die Aufnahmeeinrichtung (4) zumindest teilweise aus dem Raumbereich oberhalb des Stapels (5) aus Zwischenlagen (2) heraus bewegbar ist.

7. Verfahren zum Bereitstellen vereinzelter Zwischenlagen (2) für einen Palettierroboter, so dass die vereinzelte Zwischenlage (2) während des Palettierens von dem Palettierroboter abgeholt und zwischen bestimmten Lagen aus zu palettierenden Gegenständen angeordnet werden kann, wobei das Verfahren von einer Vorrichtung mit einem in Vertikalrichtung (Z1) bewegbaren Trägerkörper (3), einer an dem Trägerkörper (3) angeordneten Aufnahmeeinrichtung (7, 8) zum Aufnehmen der obersten Zwischenlage (2) eines Stapels (5) aus Zwischenlagen (2), wobei die Aufnahmeeinrichtung (7, 8) wenigstens einen Aufnahmehalter (7) zum Halten der obersten Zwischenlage (2) sowie eine Hubeinrichtung (8) zum Bewegen des Aufnahmehalters (7) relativ zu dem Trägerkörper (3) und in Vertikalrichtung (Z2) aufweist, und mit einer an dem Trägerkörper (3) angeordneten sowie zwischen die oberste Zwischenlage (2) und den verbleibenden Stapel (5) bewegbaren Separiereinrichtung (6) zum Separieren der obersten Zwischenlage (2) von dem Stapel (5) Gebrauch macht und folgende Schritte umfasst:
• Aufsetzen der Aufnahmeeinrichtung (7, 8) auf die oberste Zwischenlage (2) des Stapels (5),
• Anheben des Trägerkörpers (3) in der Vertikalrichtung (Z1) durch ein erstes Betätigen der Hubeinrichtung (8), wobei sich die Hubeinrichtung (8) auf dem Stapel (5) abstützt,
• Fixieren des Trägerkörpers (3) in Vertikalrichtung (Z1) in einer nach dem Anheben erreichten oberen Vertikalstellung,
• Zumindest teilweises Anheben der obersten Zwischenlage (2) mittels der Aufnahmeeinrichtung (7, 8) durch ein zweites Betätigen der Hubeinrichtung (8),
• Bewegen der Separiereinrichtung (6) zwischen die oberste Zwischenlage (2) und den verbleibenden Stapel (5),
• Lösen der Fixierung des Trägerkörpers (3) in Vertikalrichtung (Z1), so dass er sich aufgrund seines Eigengewichtes aus der oberen Vertikalstellung in Vertikalrichtung (Z1) nach unten in eine untere Vertikalstellung bewegt und dort gehalten wird, und
• Loslassen der vereinzelten obersten Zwischenlage (2) durch die Aufnahmeeinrichtung (7, 8), so dass diese von dem Palettierroboter abgeholt werden kann.

8. Verfahren nach Anspruch 7,
**dadurch gekennzeichnet, dass**
das Halten des Trägerkörpers (3) in der unteren Vertikalstellung durch Aufliegen der Separiereinrichtung (6) auf dem verbleibenden Stapel (5) erfolgt.

9. Verfahren nach Anspruch 7 oder 8,
**dadurch gekennzeichnet, dass**
das Halten des Trägerkörpers (3) in der unteren Vertikalstellung durch Fixieren des Trägerkörpers (3) in Vertikalrichtung (Z1) mittels einer Fixiereinrichtung (12, 16) erfolgt.

10. Verfahren nach einem der Ansprüche 7 bis 9,
**dadurch gekennzeichnet, dass**
das Loslassen der vereinzelten obersten Zwischenlage (2) nach dem Lösen der Fixierung des Trägerkörpers (3) in der oberen Vertikalstellung erfolgt.

11. Verfahren nach Anspruch 10,
**dadurch gekennzeichnet, dass**
das Loslassen der vereinzelten obersten Zwischenlage (2) erst dann erfolgt, wenn der Trägerkörper (3) die untere Vertikalstellung erreicht hat.

12. Verfahren nach Anspruch 10 oder 11,
**dadurch gekennzeichnet, dass**
nach dem Bewegen der Separiereinrichtung (6) zwischen die oberste Zwischenlage (2) und den verbleibenden Stapel (5) durch ein drittes Betätigen der Hubeinrichtung (8) die oberste Zwischenlage (2) von der Aufnahmeeinrichtung (7, 8) aktiv geführt auf den verbleibenden Stapel (5) abgesenkt wird.

13. Verfahren nach Anspruch 12,
**dadurch gekennzeichnet, dass**
die Aufnahmeeinrichtung (7, 8) beim Absenken der obersten Zwischenlage (2) vor dem Zeitpunkt, in welchem der Trägerkörper (3) die untere Vertikalstellung erreicht, den Stapel (5) berührt und sich an ihm abstützt, so dass die Hubeinrichtung (8) zumindest während eines Teils der Bewegung des Trägerkörpers (3) in die untere Vertikalstellung als Stoßdämpfer wirkt.

14. Verfahren nach einem der Ansprüche 7 bis 9,
**dadurch gekennzeichnet, dass**
das Loslassen der vereinzelten obersten Zwischenlage (2) vor dem Lösen der Fixierung des Trägerkörpers (3) in der oberen Vertikalstellung erfolgt.

15. Verfahren nach einem der Ansprüche 7 bis 14,
**dadurch gekennzeichnet, dass**
die Aufnahmeeinrichtung (7, 8) nach dem Loslassen der vereinzelten obersten Zwischenlage (2) zumindest teilweise aus dem Raumbereich oberhalb des Stapels (5) aus Zwischenlagen (2) heraus bewegt wird.
